# EUROPÄISCHE PATENTSCHRIFT

(11) **EP 2 694 837 B1**
(45) Veröffentlichungstag und Bekanntmachung des Hinweises auf die Patenterteilung: **11.03.2020**
(21) Anmeldenummer: 12715013.4
(22) Anmeldetag: 03.04.2012
(51) Int. Cl.: F16F 9/04

(54) **LUFTFEDER MIT HYBRIDBALG**
AIR SPRING HAVING HYBRID BELLOWS
RESSORT PNEUMATIQUE À SOUFFLET HYBRIDE

(30) Priorität: 06.04.2011 DE 102011006886; 04.05.2011 DE 102011075258; 26.01.2012 DE 102012201104
(43) Veröffentlichungstag der Anmeldung: 12.02.2014
(73) Patentinhaber: Continental Teves AG & Co. OHG, 60488 Frankfurt am Main (DE)
(72) Erfinder: BEHMENBURG, Christof, 31867 Lauenau (DE); GLEU, Jens Uwe, 30855 Langenhagen (DE); KIND, Andreas, 31141 Hildesheim (DE); KRÖGER, Dirk, 30419 Hannover (DE); NESSEL, Andreas, 30916 Isernhagen (DE); WASCHK, Reiner, 30455 Hannover (DE)
(86) Internationale Anmeldenummer: PCT/EP2012/056060
(87) Internationale Veröffentlichungsnummer: WO 2012/136650

(56) Entgegenhaltungen:
- EP-A1- 2 090 801
- DE-A1- 19 614 476
- DE-A1-102007 004 035
- GB-A- 2 456 750

## Beschreibung

Die Erfindung betrifft eine Luftfederanordnung für ein Kraftfahrzeug.

Bei Achsen eines Kraftfahrzeugs, zum Beispiel Vorderachs-Mehrlenkerachsen, werden durch Lenk- und Federbewegungen erzeugte Torsionen- und Kardanikbewegungen in einem Federbein, welches ein Verbindungselement zwischen Achse und Karosserie des Fahrzeugs darstellt, übertragen. Das Federbein muss daher dazu ausgebildet sein, diese Störbewegungen ohne eine Schädigung der Bauelemente des Federbeins aufzunehmen. Daher weist ein Federbein in der Regel elastische Bauelemente, zum Beispiel einen Luftfederbalg, vorzugsweise in der Ausführungsform eines Schlauchrollbalgs, auf.

Bei bisherigen Ausführungsformen einer Luftfeder wird ein Luftfederbalg verwendet, welcher eine geringe Anzahl von Lagen von Gewebefestigkeitsträgern aufweist und als eine außen geführte Variante ausgeprägt ist. In heute üblichen Ausführungsformen eines Federbeins weist der Luftfederbalg üblicherweise zwei Lagen von Gewebefestigkeitsträgern auf, bei denen die jeweiligen Fadenverstärkungen überkreuzt in einem definierten Winkel, zum Beispiel 70°, zur zentralen Längsachse des Federbeins angeordnet sind. Zum Ausgleich der dadurch verursachten Torsionssteifigkeit weisen die Luftbälge der heutigen Federbeine häufig zusätzlich eine Kardanikfalte auf, wobei dieser freiliegende Bereich zwischen einem Luftfederdeckel und der Außenführung des Federbeins durch zusätzliche Gewebe- und/oder Elastomerlagen in Kreuzlagenbauweise verstärkt wird. Der Grundaufbau des Luftfederbalgs bekannter Federbeine ist dabei durchgehend vom Luftfederdeckel bis zur abrollkolbenseitigen Kolbenklemmung.

Bekannte Ausführungsformen der Federbeine sind somit in der Regel generell torsionssteif. Das heißt, sie können Torsionsbewegungen nur in beschränkter Weise im Bereich einer Roll- und/oder Kardanikfalte aufnehmen. Größere Torsionsbelastungen führen somit zu einem vorzeitigen Versagen des Luftfederbalgs im Rollfaltenbereich.

Zur Verringerung der Torsionssteifigkeit der Federbeine werden im Stand der Technik Luftfederbalgkonstruktionen verwendet, deren Fadenverstärkungen der Gewebefestigkeitsträger vorzugsweise annähernd parallel zur zentralen Längsachse des Federbeins verlaufen. Um aber den konträren Komfortanforderungen entgegenzukommen, werden derartige Luftfederbälge meist nur in einer Lage von Gewebefestigkeitsträgern ausgeführt. Erfüllung der Komfortanforderungen und eine Verringerung der Torsionssteifigkeit stellen entgegengesetzte Zielrichtungen dar, deren Konstruktionsweisen der Luftfederbälge sich unterscheiden und bisher in keiner einheitlichen Konstruktion eines Luftfederbalgs realisierbar wären.

Den Stand der Technik zur Luftfederanordnung geben die Druckschriften EP 1 285 181 B1 und DE 100 09 912 C1 wieder.

Die 10 2007 004 035 A1 offenbart einen schlauchförmigen Rollbalg einer Luftfeder aus elastomeren Material mit eingebetteten Fäden, wobei die Fäden in einem ersten Abschnitt des Rollbalgs in Bezug zur Längsachse unter einem Winkel verlaufen und in einem zweiten Abschnitt im Wesentlichen parallel zur Längsachse verlaufen. Der zweite Abschnitt ist von einer Außenführung umgeben, während der erste Abschnitt frei bleibt. Dadurch bildet sich in dem ersten Abschnitt eine sich radial nach außen ersteckende kardanisch wirksame Falte aus. Der erste Abschnitt des Rollbalgs wird mit dem Luftfederdeckel verbunden.

Der Erfindung liegt die Aufgabe zugrunde, eine verbesserte Luftfederanordnung zu schaffen.

Die der Erfindung zugrunde liegende Aufgabe wird jeweils mit den Merkmalen des unabhängigen Patentanspruchs gelöst. Bevorzugte Ausführungsformen der Erfindung sind in den abhängigen Patentansprüchen angegeben.

Es wird eine Luftfederanordnung für ein Kraftfahrzeug geschaffen, umfassend eine Luftfeder, einen Luftfederbalg, einen Luftfederdeckel und einen Abrollkolben, wobei der Luftfederbalg ein Schlauchrollbalg ist, wobei der Luftfederbalg zwischen dem Luftfederdeckel und dem Abrollkolben konzentrisch um eine zentrale Längsachse der Luftfeder angeordnet ist, wobei der Luftfederbalg einen ersten Teilluftfederbalg und einen zweiten Teilluftfederbalg aufweist, wobei der erste Teilluftfederbalg am deckelseitigen Ende der Luftfeder ein Luftvolumen teilweise umschließt, wobei der zweite Teilluftfederbalg am abrollkolbenseitigen Ende der Luftfeder das Luftvolumen umschließt, wobei der erste Teilluftfederbalg einen ersten eingebetteten Gewebefestigkeitsträger aufweist, wobei der zweite Teilluftfederbalg einen zweiten eingebetteten Gewebefestigkeitsträger aufweist, wobei der erste Gewebefestigkeitsträger erste Fadenverstärkungen aufweist, deren Vorzugsachse parallel oder nahezu parallel zur Achse der zentralen Längsachse der Luftfeder verläuft, wobei der zweite Gewebefestigkeitsträger zweite Fadenverstärkungen aufweist, deren erste Vorzugsachse schräg zur Längsachse der Luftfeder verläuft und deren zweite Vorzugsachse schräg zur Längsachse der Luftfeder verläuft, wobei die erste und die zweite Vorzugsachse gewinkelt zueinander stehen.

Dies kann den Vorteil haben, dass scheinbar konträre Zielsetzungen, wie eine Erfüllung von Komfortanforderungen und Verringerung der Torsionssteifigkeit, gleichzeitig und ohne gegenseitige Einschränkung realisiert werden können. Die beschriebene Luftfederanordnung weist durch ihre Kombination eines ersten Teilluftfederbalgs in Kreuzlagenbauweise zur Erfüllung der Komfortanforderung und eines zweiten Teilluftfederbalgs in Axialbauweise zur Sicherstellung einer Torsions- und Kardanikaufnahme, eine effektive Entkopplung zwischen einem "Abrollbereich" und einem "Elastizitätsbereich" auf. Der somit entstandene "Hybridbalg" weist somit zugleich Komfortanforderungen und eine Verringerung der Torsionssteifigkeit auf.

Zudem weist der erste Teilluftfederbalg eine erste Elastomermischung auf und der zweite Teilluftfederbalg eine zweite Elastomermischung, wobei die erste Elastomermischung sich von der zweiten Elastomermischung unterscheidet oder die erste Elastomermischung mit der zweiten Elastomermischung identisch ist, wobei die erste Elastomermischung mindestens eine erste Elastomerlage aufweist und die zweite Elastomermischung mindestens eine zweite Elastomerlage aufweist.

Dies kann den Vorteil haben, dass den verschiedenen Anforderungen an den Luftfederbalg, das heißt Erfüllung von Komfortanforderungen und Verringerung der Torsionssteifigkeit, jeweils durch eine geeignete Elastomermischung mit unterschiedlichen Elastizitätsmodulen Rechnung getragen werden könnte. Dabei kann nicht nur durch Wahl einer bestimmten Elastomermischung auf einen bestimmten Erfüllungsgrad der jeweiligen Anforderung eine variable Anpassung gewährleistet werden, sondern auch durch die Wahl einer bestimmten Anzahl von Elastomerlagen kann auf die jeweiligen Anforderungen entsprechend eingegangen werden. Der Hybridbalg weist somit eine hohe Variabilität und Anpassungsfähigkeit an die jeweiligen Anforderungen des Federbeins auf.

Erfindungsgemäß weist der erste Teilluftfederbalg ein Faltensystem auf, wobei das Faltensystem mindestens zwei Falten umfasst, wobei die mindestens zwei Falten durch eine Faltung der Lagen der ersten eingebetteten Gewebefestigkeitsträgern und/oder der ersten Elastomerlagen gebildet sind, wobei die mindestens zwei Falten aus Sicht der zentralen Längsachse der Luftfeder zwei Scheitellinien und eine gemeinsame Troglinie aufweisen, wobei die mindestens zwei Scheitellinien und die mindestens eine Troglinie konzentrisch um die Längsachse der Luftfeder verlaufen, wobei die mindestens zwei Scheitellinien maximalen Radien des ersten Teilluftfederbalgs entsprechen und die mindestens eine Troglinie einem minimalen Radius des ersten Teilluftfederbalgs entspricht, wobei das Faltensystem eine Einschnürung des ersten Teilluftfederbalgs zur Bildung der einen Troglinie aufweist, wobei die Einschnürung dazu ausgebildet ist, einen Ring oder eine Bandage aus Cord aufzunehmen.

Dies kann den Vorteil haben, dass der erste Teilluftfederbalg, welcher eine parallele Anordnung der Fadenverstärkung zur zentralen Längsachse des Federbeins aufweist, gegen transversal wirkende Kräfte stabilisiert wird. Somit würde der erste Teilluftfederbalg nicht nur Torsionsbewegungen und kardanische Bewegungen abfedern, sondern würde auch hinsichtlich seiner Robustheit gegen transversal wirkenden Querkräften verstärkt werden. Zudem würde das Faltensystem hinsichtlich seiner Ausprägung stabilisiert werden.

Nach einer Ausführungsform der Erfindung weist der erste Teilluftfederbalg eine erste Anzahl von Lagen der ersten eingebetteten Gewebefestigkeitsträger und/oder der ersten Elastomerlagen auf und der zweite Teilluftfederbalg eine zweite Anzahl von Lagen der zweiten eingebetteten Gewebefestigkeitsträger und/oder der zweiten Elastomerlagen, wobei die erste Anzahl von Lagen sich von der zweiten Anzahl von Lagen unterscheidet, wobei die ersten und die zweiten Elastomerlagen dazu ausgebildet sind, das Luftvolumen gegen eine äußere Umgebung abzudichten.

Dies kann den Vorteil haben, dass entsprechend den Anforderungen an den Luftfederbalg eine geeignete Anzahl von Lagen von eingebetteten Gewebefestigkeitsträgern und/oder Elastomerlagen bei beiden Luftfederbälgen verwendet werden könnte. Um zum Beispiel die Komfortanforderung in einem hohen Maße zu erfüllen, könnte der zweite Teilluftfederbalg im Abrollbereich mehrere Lagen von Gewebefestigkeitsträgern mit kreuzweise angeordneten Fadenverstärkungen aufweisen. Hingegen könnte für eine signifikante Verringerung der Torsionssteifigkeit der erste Teilluftfederbalg im Elastizitätsbereich mehrere Lagen von Gewebefestigkeitsträgern mit parallel zur zentralen Längsachse des Federbeins verlaufenden Fadenverstärkungen sowie mehreren Elastomerlagen zur Abdichtung des vom Rollbalg eingeschlossenen Luftvolumens aufweisen. Wieder zeigt der so konstruierte Hybridbalg hinsichtlich seiner Konstruktionsweise größte Flexibilität und Anpassbarkeit an die jeweiligen Anforderungen.

Nach einer Ausführungsform der Erfindung weist der erste Teilluftfederbalg mindestens so viele Lagen von ersten eingebetteten Gewebefestigkeitsträgern auf wie der zweite Teilluftfederbalg.

Dies kann den Vorteil haben, dass der Hybridbalg in seinem Elastizitätsbereich im Vergleich zum Abrollbereich einen verstärkten Aufbau aufweisen könnte. Bisherige Konstruktionen von Federbeinen, die sich durch einen dünnen Balgaufbau im Abrollbereich auszeichnen, müssten somit im Abrollbereich wenig beim Austausch eines bisherigen Laufrollbalgs durch den beschriebenen Hybridbalg verändert werden. Gleichzeitig könnte durch eine Verstärkung des ersten Teilluftfederbalgs durch eine Erhöhung der Anzahl von ersten eingebetteten Gewebefestigkeitsträgern mit zum Beispiel parallel zur Längsachse des Federbeins verlaufenden Federverstärkungen verstärkt werden. Dadurch würde die Torsionssteifigkeit des Luftfederbalgs wesentlich reduziert werden.

Nach einer Ausführungsform der Erfindung bilden die erste und die zweite Elastomerlage eine gemeinsame Elastomerlage oder die erste und die zweite Elastomerlage sind segmentiert.

Dies kann den Vorteil haben, dass entweder auf die Abdichtungsfunktion des Luftfederbalgs größeren Wert gelegt werden kann oder eine Erfüllung der Komforteigenschaften stärker im Vordergrund stehen. Zudem kann variiert werden, ob eine Kraftübertragung von dem ersten Teilluftfederbalg zum zweiten Teilluftfederbalg verstärkt oder verringert werden sollte.

Nach einer Ausführungsform der Erfindung variieren ein erster Winkel der ersten Vorzugsachse der zweiten Fadenverstärkungen und ein zweiter Winkel der zweiten Vorzugsachse der zweiten Fadenverstärkungen relativ zur Längsachse der Luftfeder innerhalb des zweiten Teilluftfederbalgs.

Dies kann den Vorteil haben, dass unterschiedliche Komfortanforderungen durch den jeweils geeigneten Verlauf der Fadenverstärkungen der Gewebefestigkeitsträger erfüllt werden könnten. Wieder weist sich der Hybridbalg durch eine beliebige Kombinatorik von Balgaufbauten hinsichtlich der Festigkeitsträger sogar innerhalb eines Teilluftfederbalgs aus.

Der erste Teilluftfederbalg kann ein Faltensystem aufweisen, wobei das Faltensystem eine Falte umfasst, wobei die Falte durch eine Faltung der Lagen der ersten eingebetteten Gewebefestigkeitsträger und/oder der ersten Elastomerlagen gebildet ist, wobei die Falte aus Sicht der zentralen Längsachse der Luftfeder eine Scheitellinie und mindestens eine Troglinie aufweist, wobei die Scheitellinie und die mindestens eine Troglinie konzentrisch um die zentrale Längsachse der Luftfeder verlaufen, wobei die Scheitellinie einem maximalen Radius des ersten Teilluftfederbalgs entspricht und die Troglinie einem minimalen Radius des ersten Teilluftfederbalgs.

Dies kann den Vorteil haben, dass die im Elastizitätsbereich des Luftfederbalgs gebildete Kardanikfalte zusätzlich zur Verringerung der Torsionssteifigkeit und zu einer verbesserten Toleranz von kardanischen Bewegungen beiträgt. Auch hierdurch kann einem vorzeitigen Versagen des Luftfederbalgs wegen störender Torsions- und kardanischen Bewegungen entgegengewirkt werden. Die Kardanikfalte des Hybridbalgs trägt somit auch zu einer Verlängerung der Lebensdauer des Luftbalgs bei.

Nach einer Ausführungsform der Erfindung ist die Einschnürung so ausgebildet, dass der Ring in axialer Richtung formschlüssig aufnehmbar ist.

Dies kann den Vorteil haben, dass bei der Mehrfaltenform des Elastizitätsbereichs des ersten Teilluftfederbalgs durch den in axialer Richtung formschlüssig in der Einschnürung liegenden Ring gleichzeitig eine axiale Stabilisierung des Luftfederbalgs gewährleistet würde.

Nach einer Ausführungsform der Erfindung weist der erste Teilluftfederbalg an seiner Innenseite an der mindestens einen Troglinie des Faltensystems einen elastisch verformbaren Gegenhalter auf, wobei der Gegenhalter dazu ausgebildet ist, den Ring formschlüssig mit mindestens einer der Lagen der ersten eingebetteten Gewebefestigkeitsträger und/oder der ersten Elastomerlagen aufzunehmen.

Dies kann den Vorteil haben, dass eine zusätzliche Elastizität zur Aufnahme von transversal zur Längsachse des Luftfederbeins wirkenden Kräften in den Elastizitätsbereich des Hybridbalgs integriert werden könnte. So könnte zum Beispiel der Gegenhalter elastisch verformbar ausgeprägt sein, so dass beim Wirken von senkrecht zur Längsachse des Federbeins wirkenden Kräften bei der Rückfederung des Gegenhalters der Außenring auf dem Luftfederbalg verpresst wird.

Nach einer Ausführungsform der Erfindung ist der Ring in mindestens eine der mindestens einen ersten Gewebe- und/oder Elastomerlage des ersten Teilluftfederbalgs eingebettet.

Dies kann den Vorteil haben, dass der Ring trotz stabiler Fixierung innerhalb mindestens einer Gewebe- und/oder einer Elastomerlage mit den Elastomerlagen sowohl in einer transversal zur Längsachse des Federbeins gerichteten Schwingungsbewegung als auch bei einer parallel zur Längsachse des Luftfederbeins erfolgenden Schwingbewegung des Luftfederbalgs in seinem Elastizitätsbereich mitschwingen könnte.

Nach einer Ausführungsform der Erfindung umfasst die Luftfederanordnung weiter eine zylinderförmige Außenführung der Luftfeder, wobei die Längsachse der Außenführung kongruent mit der zentralen Längsachse der Luftfeder ist, wobei die Außenführung den Luftfederbalg teilweise umschließt, wobei der erste Teilluftfederbalg und der zweite Teilluftfederbalg mittels einer Zusammenvulkanisation, einer Verklebung und/oder eines Klemmrings in dem Überlappungsbereich des ersten Teilluftfederbalgs und des zweiten Teilluftfederbalgs an einer Innenwandung der Außenführung fixiert sind, wobei der erste Teilluftfederbalg und der zweite Teilluftfederbalg durch die Zusammenvulkanisation, die Verklebung und/oder den Klemmring aneinander fixiert sind.

Dies kann den Vorteil haben, dass im Überlappungsbereich von dem ersten Teilluftfederbalg und dem zweiten Teilluftfederbalg eine stabile Verbindung geschaffen werden könnte. Insbesondere könnten nach einer Konfektion in einem Vulkanisationsprozess der erste Teilluftfederbalg und der zweite Teilluftfederbalg zu einem einzigen Endprodukt verbunden werden. So könnten insbesondere bei einer Zusammenvulkanisation des ersten Teilluftfederbalgs und des zweiten Teilluftfederbalgs für eine Verbindung dieser beiden weitere Bauteile zur Schaffung einer Verbindung nicht mehr notwendig sein. Dies würde zu einer Gewichtsreduktion des Luftfederbeins als auch zu einer Reduktion der Herstellungskosten führen. Auch ergeben sich durch den Verzicht auf weitere Bauteile erhebliche Vorteile bei einem Transport des Federbeins. Bei einer weiteren möglichen Ausführungsform, bei der das Faltensystem aus nur einer Falte bestehen würde, könnten bei weiterhin sehr guter Flexibilität der Balgapplikation wiederum Kosten gesenkt werden.

Im Folgenden werden bevorzugte Ausführungsformen der Erfindung anhand der folgenden Zeichnungen näher erläutert.

Es zeigen:
- Figur 1: ein Hybridbalg,
- Figur 2: einen Hybridbalg mit Faltensystem beim ersten Teilluftfederbalg,
- Figur 3: verschiedene Ausführungsformen einer Ringpositionierung im Einschnürungsbereich des Faltensystems des ersten Teilluftfederbalgs.

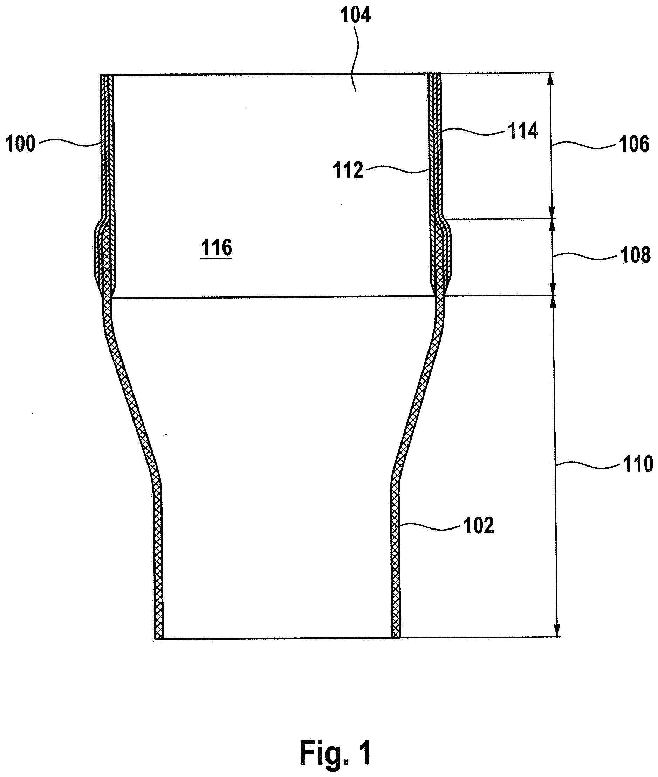

Die Figur 1 zeigt einen Hybridbalg 104 umfassend einen ersten Teilluftfederbalg 100 und einen zweiten Teilluftfederbalg 102. Der Hybridbalg weist einen Elastizitätsbereich 106 sowie einen Abrollbereich 110 auf. Im Überlappungsbereich 108 überlappen sich der erste Teilluftfederbalg 100 und der zweite Teilluftfederbalg 102.

Der erste Teilluftfederbalg 100 kann aus einer oder mehreren Gewebelagen 114 bestehen. Die Gewebelagen weisen Fadenverstärkungen auf, deren Vorzugsrichtung parallel zur zentralen Längsachse (214) des Federbeins verläuft. Optional kann der erste Teilluftfederbalg 100 eine oder mehrere Elastomerlagen 112 zur Abdichtung des umschlossenen Luftvolumens 116 aufweisen.

Der zweite Teilluftfederbalg 102 kann eine oder mehrere Gewebe- und/oder Elastomerlagen aufweisen. Die Gewebelagen des zweiten Teilluftfederbalgs 102 könnten einen Kreuzlagenaufbau aufweisen, das heißt die Vorzugsachsen der Fadenverstärkungen verlaufen schräg zur Längsachse (214) des Federbeins und zueinander gewinkelt.

Der Hybridbalg 104 nimmt somit in seinem Elastizitätsbereich 106 vielmehr Torsions- und kardanische Bewegungen auf. In seinem Abrollbereich 110 erfüllt der Hybridbalg 104 primär Komfortanforderungen.

Im Überlappungsbereich 108 könnte durch eine Vulkanisation während des Herstellungsprozess und/oder ein Verkleben des ersten Teilluftfederbalgs 100 und des zweiten Teilluftfederbalgs 102 eine ausreichende Überlappung und Verbindung hergestellt werden, sodass Kräfte über Elastomerlagen des ersten Teilluftfederbalgs 100 und des zweiten Teilluftfederbalgs 102 direkt übertragen werden könnten.

Dabei könnte beispielsweise eine innere Gummischicht vom Abrollbereich 110 durchgehend zum Elastizitätsbereich 106 oder zwischen den beiden Bereichen geteilt aufgelegt werden. Der Grad einer Übertragung von Kräften zwischen den beiden Teilluftfederbälgen könnte somit variiert werden.

Im Elastizitätsbereich 106 könnte in einem Wickelverfahren aus einer Gummi kalandrierten Gewebelage auf einem Kreuzlagenrohling des Abrollbereichs 110 aufgelegt werden. Dies könnte bei einem Konfektionsdurchmesser geschehen, welcher dem Konfektionsdurchmesser eines Rohlings des Abrollbereichs 110, dem Durchmesser des vulkanisierten Endprodukts oder einem dazwischenliegenden Durchmesser entspräche.

In einer Ausführungsform der Erfindung könnte ein Rohling des Elastizitätsbereichs 106 durch eine stoßfreie kontinuierliche Konfektion auf einem geeigneten Durchmesser hergestellt worden sein. Der Rohling für den Elastizitätsbereich 106 würde dann mit dem Rohling für den Abrollbereich 110 erst vor einer Vulkanisation zu einem Endprodukt zusammengeführt werden.

Die Verbindung der überlappenden Bereiche des ersten Teilluftfederbalgs 100 und des zweiten Teilluftfederbalgs 102 im Überlappungsbereich 108 könnte vorzugsweise mittels einer Vulkanisation von durch aufliegend klebend verbundenen Grenzflächen des ersten Teilluftfederbalgs 100 und des zweiten Teilluftfederbalgs 102 realisiert werden. Eine alternative bzw. zusätzliche Verbindung der beiden Teilluftfederbälge könnte durch eine Verklemmung im Überlappungsbereich 108 im Zuge einer Verbindung mit einer Außenführung und/oder durch eine Verklebung mit einem Extrakleber realisiert werden.

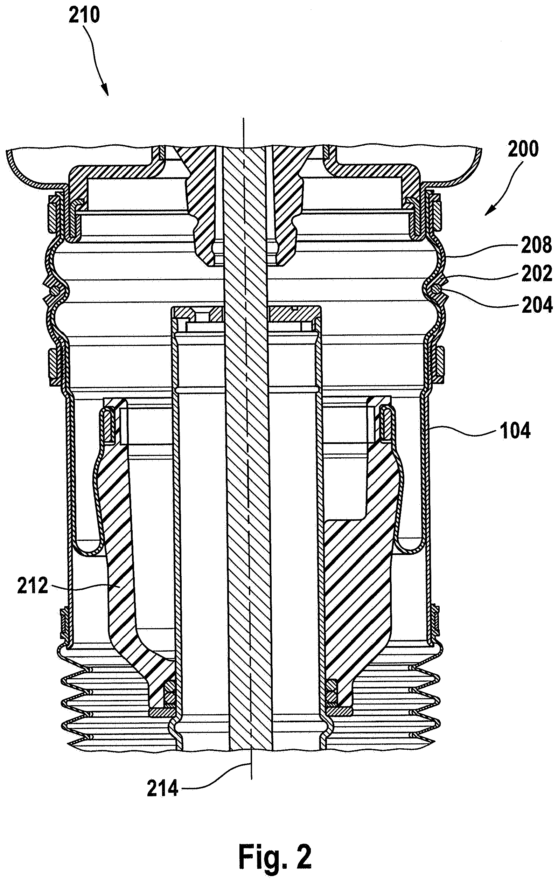

Figur 2 zeigt einen Längsschnitt durch eine Luftfeder 210 eines Federbeins 200. Der Hybridbalg 104 weist in seinem Elastizitätsbereich 106 ein Faltensystem 202 mit zwei Falten 208 auf. Im Einschnürungsbereich des Faltensystems 202 weist der Hybridbalg 104 einen durch einen Vulkanisationsprozess zwischen die Balglagen eingebetteten Ring 204 im Bereich des Elastizitätsbereichs 106 auf. Der Luftfederbalg 104 kann auf einem Abrollkolben 212 abrollen. Die zentrale Längsachse 214 könnte bei nicht frei stehenden Luftfedern durch ein Stoßdämpferrohr dargestellt werden.

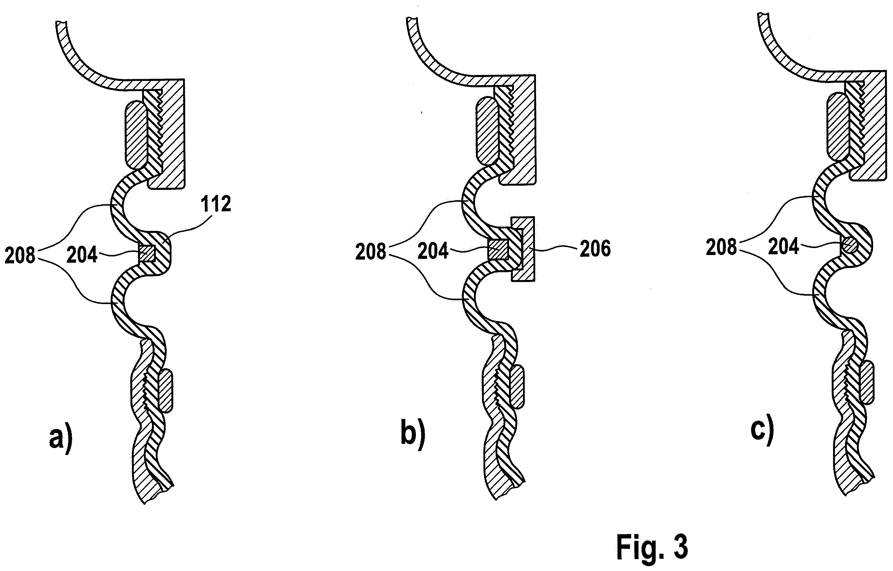

Figur 3 zeigt verschiedene Ausführungsformen einer Positionierung des Rings 204 im Faltenbereich 202 des Hybridbalgs 104. Dabei würde die zentrale Längsachse 214 der Luftfeder 210 jeweils auf der rechten Seite der einzelnen Teilabbildungen 3a), 3b) und 3c) angeordnet sein, was hier nicht dargestellt ist. Die oben erwähnten Scheitel- und Troglinien wären jeweils aus Sicht dieser sich rechts von jeder Teilabbildung 3a), 3b) und 3c) befindlichen zentralen Längsachse 214 der Luftfeder 210 zu definieren.

In Figur 3a erfolgt eine formschlüssige Fixierung des Rings 204 mittels einer entsprechenden Formgestaltung der Elastomerlage 112. Der Ring 204 wird durch die gebildete Form formschlüssig aufgenommen. Die entsprechende geometrische Formgebung der Elastomerlage 112 könnte in einem Vulkanisationsprozess bei der Herstellung des Hybridbalgs 104 erfolgt sein.

Die Figur 3b zeigt eine Verklemmung des Rings 204 auf der Außenseite des ersten Teilluftfederbalgs 100 mittels eines Gegenhalters 206 auf der Innenseite des ersten Teilluftfederbalgs 100 im Faltensystem 202. Dabei könnte der Ring 204 aus einem plastischen Material bestehen, während der Gegenhalter 206 aus einem elastisch verformbaren Material bestehen könnte. Durch eine durch Kräfte verursachte Rückfederung des Gegenhalters 206 könnte der Ring 204 auf dem ersten Teilluftfederbalg 100 im Einschnürungsbereich des Faltensystems 202 verpresst werden. Der Gegenhalter 206 könnte zudem eine geeignete Formgebung aufweisen, zum Beispiel eine O-Form, um den Ring vom Innenbereich des ersten Teilluftfederbalgs 100 in Richtung nach außen zu umschließen.

Figur 3c zeigt eine Einbettung des Rings 204 innerhalb der Elastomerlagen (112) des ersten Teilluftfederbalgs 100. Der Ring 204 könnte bei der Herstellung im Rahmen einer Konfektion des ersten Teilluftfederbalgs 100 eingelegt und mit dem Balg zusammen vulkanisiert worden sein.

In allen Ausführungsformen könnte der Ring unterschiedliche Bauformen aufweisen, zum Beispiel einen kreisrunden, eckigen oder ovalen Durchmesser aufweisen.

Bei Ausprägung des Faltensystems 202 als eine Mehrfaltenform ist eine Einschnürung bzw. Bandagierung des Hybridbalgs 104 erforderlich. Die notwendige Einschnürung kann dabei nicht nur mit einem umschließenden Ring in unterschiedlichen Bauformen und Materialien umgesetzt werden, sondern auch in Form einer Bandage durch mehrfaches Umwickeln eines Cordes.

### Bezugszeichenliste

- 100: erster Teilluftfederbalg
- 102: zweiter Teilluftfederbalg
- 104: Luftfederbalg, hier: Hybridbalg
- 106: Elastizitätsbereich
- 108: Überlappungsbereich
- 110: Abrollbereich
- 112: Elastomerlage
- 114: Gewebelage
- 116: Luftvolumen
- 200: Federbein
- 202: Faltensystem
- 204: Ring
- 206: Gegenhalter
- 208: Falte
- 210: Luftfeder
- 212: Abrollkolben
- 214: zentrale Längsachse

## Patentansprüche

1. Luftfederanordnung für ein Kraftfahrzeug umfassend eine Luftfeder (210), einen Luftfederbalg (104), einen Luftfederdeckel und einen Abrollkolben (212), wobei der Luftfederbalg (104) ein Schlauchrollbalg ist, wobei der Luftfederbalg (104) zwischen dem Luftfederdeckel und dem Abrollkolben (212) konzentrisch um eine zentrale Längsachse (214) der Luftfeder (210) angeordnet ist, wobei der Luftfederbalg (104) einen ersten Teilluftfederbalg (100)und einen zweiten Teilluftfederbalg (102) aufweist, wobei der erste Teilluftfederbalg (100) am deckelseitigen Ende der Luftfeder (210) ein Luftvolumen (116) teilweise umschließt, wobei der zweite Teilluftfederbalg (102) am Abrollkolbenseitigen Ende der Luftfeder (210) das Luftvolumen (116) umschließt, wobei der erste Teilluftfederbalg (100) einen ersten eingebetteten Gewebefestigkeitsträger aufweist, wobei der zweite Teilluftfederbalg (102)einen zweiten eingebetteten Gewebefestigkeitsträger aufweist, **dadurch gekennzeichnet, dass** der erste Gewebefestigkeitsträger erste Fadenverstärkungen aufweist, deren Vorzugsachse parallel oder nahezu parallel zur Achse der zentralen Längsachse (214) der Luftfeder (210) verläuft, wobei der zweite Gewebefestigkeitsträger zweite Fadenverstärkungen aufweist, deren erste Vorzugsachse schräg zur Längsachse (214) der Luftfeder (210) verläuft und deren zweite Vorzugsachse schräg zur Längsachse (214) der Luftfeder (210) verläuft, wobei die erste und die zweite Vorzugsachse gewinkelt zueinander stehen, wobei der erste Teilluftfederbalg (100) eine erste Elastomermischung aufweist und der zweite Teilluftfederbalg (102) eine zweite Elastomermischung aufweist, wobei die erste Elastomermischung sich von der zweiten Elastomermischung unterscheidet oder die erste Elastomermischung mit der zweiten Elastomermischung identisch ist, wobei die erste Elastomermischung mindestens eine erste Elastomerlage (112) aufweist und die zweite Elastomermischung mindestens eine zweite Elastomerlage (112) aufweist, wobei der erste Teilluftfederbalg (100) ein Faltensystem (202) aufweist, wobei das Faltensystem (202) mindestens zwei Falten (208) umfasst, wobei die mindestens zwei Falten (208) durch eine Faltung der Lagen der ersten eingebetteten Gewebefestigkeitsträgern und/oder der ersten Elastomerlagen (112) gebildet sind, wobei die mindestens zwei Falten (208) aus Sicht der zentralen Längsachse (214) der Luftfeder (210) zwei Scheitellinien und eine gemeinsame Troglinie aufweisen, wobei die mindestens zwei Scheitellinien und die mindestens eine Troglinie konzentrisch um die Längsachse (214) der Luftfeder (210) verlaufen, wobei die mindestens zwei Scheitellinien maximalen Radien des ersten Teilluftfederbalgs (100) entsprechen und die mindestens eine Troglinie einem minimalen Radius des ersten Teilluftfederbalgs (100) entspricht, wobei das Faltensystem (202) eine Einschnürung des ersten Teilluftfederbalgs (100) zur Bildung der einen Troglinie aufweist, wobei die Einschnürung dazu ausgebildet ist, einen Ring (204) oder eine Bandage aus Cord aufzunehmen.

2. Luftfederanordnung nach Anspruch 1, wobei der erste Teilluftfederbalg (100) eine erste Anzahl von Lagen der ersten eingebetteten Gewebefestigkeitsträger und/oder der ersten Elastomerlagen (112) aufweist und der zweite Teilluftfederbalg (102) eine zweite Anzahl von Lagen der zweiten eingebetteten Gewebefestigkeitsträger und/oder der zweiten Elastomerlagen (112) aufweist, wobei die erste Anzahl von Lagen sich von der zweiten Anzahl von Lagen unterscheidet, wobei die ersten und die zweiten Elastomerlagen (112) dazu ausgebildet sind, das Luftvolumen (116) gegen eine äußere Umgebung abzudichten.

3. Luftfederanordnung nach einem der vorhergehenden Ansprüche, wobei der erste Teilluftfederbalg (100) mindestens so viele Lagen von ersten eingebetteten Gewebefestigkeitsträgern aufweist wie der zweite Teilluftfederbalg (102) .

4. Luftfederanordnung nach Anspruch 1, wobei die erste und die zweite Elastomerlage (112) eine gemeinsame Elastomerlage (112) bilden oder wobei die erste und die zweite Elastomerlage (112) segementiert sind.

5. Luftfederanordnung nach Anspruch 1, wobei die Einschnürung so ausgebildet ist, dass der Ring (204) in axialer Richtung formschlüssig aufnehmbar ist.

6. Luftfederanordnung nach Anspruch 5, wobei der erste Teilluftfederbalg (100) an seiner Innenseite an der mindestens einen Troglinie des Faltensystems (202) einen elastisch verformbaren Gegenhalter (206) aufweist, wobei der Gegenhalter (206) dazu ausgebildet ist, den Ring (204) formschlüssig mit mindestens einer der Lagen der ersten eingebetteten Gewebefestigkeitsträgern und/oder der ersten Elastomerlagen (112) aufzunehmen.

7. Luftfederanordnung nach einem der Ansprüche 1 bis 6, wobei der Ring (204) in mindestens eine der mindestens einen ersten Gewebe- und/oder Elastomerlage (112) des ersten Teilluftfederbalgs (100) eingebettet ist.

8. Luftfederanordnung nach einem der vorhergehenden Ansprüche, wobei der erste Teilluftfederbalg (100) und der zweite Teilluftfederbalg (102) einen Überlappungsbereich (108) bilden.

9. Luftfederanordnung nach Anspruch 8, weiter umfassend eine zylinderförmige Außenführung der Luftfeder (210), wobei die Längsachse (214) der Außenführung kongruent mit der Längsachse (214) der Luftfeder ist, wobei die Außenführung den Luftfederbalg (104) teilweise umschließt, wobei der erste Teilluftfederbalg (100) und der zweite Teilluftfederbalg (102) mittels einer Zusammenvulkanisation, einer Verklebung und/oder eines Klemmrings (204) in dem Überlappungsbereich (108) des ersten Teilluftfederbalgs (100) und des zweiten Teilluftfederbalgs an einer Innenwandung der Außenführung fixiert sind, wobei der erste Teilluftfederbalg (100) und der zweite Teilluftfederbalg (102)durch die Zusammenvulkanisation, die Verklebung und/oder den Klemmring (204) aneinander fixiert sind.

## Claims

1. Air spring assembly for a motor vehicle, comprising an air spring (210), an air spring bellows (104), an air spring cover, and a rolling piston (212), wherein the air spring bellows (104) is a tubular rolling bellows, wherein the air spring bellows (104) is arranged concentrically about a central longitudinal axis (214) of the air spring (210), between the air spring cover and the rolling piston (212), wherein the air spring bellows (104) has a first partial air spring bellows (100) and a second partial air spring bellows (102), wherein the first partial air spring bellows (100) partially encloses an air volume (116) at the end of the air spring (210) on the cover side, wherein the second partial air spring bellows (102) encloses the air volume (116) at the end of the air spring (210) on the rolling piston side, wherein the first partial air spring bellows (100) has a first embedded textile reinforcement, wherein the second partial air spring bellows (102) has a second embedded textile reinforcement, **characterized in that** the first textile reinforcement has first reinforcing threads, the preferred axis of which extends parallel or nearly parallel to the axis of the central longitudinal axis (214) of the air spring (210), wherein the second textile reinforcement has second reinforcing threads, the first preferred axis of which extends obliquely to the longitudinal axis (214) of the air spring (210) and the second preferred axis of which extends obliquely to the longitudinal axis (214) of the air spring (210), wherein the first and the second preferred axis are at an angle to each other, wherein the first partial air spring bellows (100) comprises a first elastomer blend, and the second partial air spring bellows (102) comprises a second elastomer blend, wherein the first elastomer blend differs from the second elastomer blend or the first elastomer blend is identical with the second elastomer blend, wherein the first elastomer blend comprises at least one first elastomer layer (112), and the second elastomer blend comprises at least one second elastomer layer (112), wherein the first partial air spring bellows (100) has a system of folds (202), wherein the system of folds (202) comprises at least two folds (208), wherein the at least two folds (208) are formed by folding the layers of the first embedded textile reinforcements and/or of the first elastomer layers (112), wherein the at least two folds (208) have two apex lines and a common trough line when viewed from the central longitudinal axis (214) of the air spring (210), wherein the at least two apex lines and the at least one trough line extend concentrically around the longitudinal axis (214) of the air spring (210), wherein the at least two apex lines correspond to maximum radii of the first partial air spring bellows (100) and the at least one trough line corresponds to a minimum radius of the first partial air spring bellows (100), wherein the system of folds (202) comprises a constriction of the first partial air spring bellows (100) to form the one trough line, wherein the constriction is designed to accommodate a ring (204) or a cord bandage.

2. Air spring assembly according to Claim 1, wherein the first partial air spring bellows (100) comprises a first number of layers of the first embedded textile reinforcements and/or of the first elastomer layers (112), and the second partial air spring bellows (102) comprises a second number of layers of the second embedded textile reinforcements and/or of the second elastomer layers (112), wherein the first number of layers differs from the second number of layers, wherein the first and second elastomer layers (112) are designed to seal off the air volume (116) from an external environment.

3. Air spring assembly according to one of the preceding claims, wherein the first partial air spring bellows (100) comprises at least as many layers of first embedded textile reinforcements as the second partial air spring bellows (102).

4. Air spring assembly according to Claim 1, wherein the first and the second elastomer layer (112) form a common elastomer layer (112) or wherein the first and the second elastomer layer (112) are segmented.

5. Air spring assembly according to Claim 1, wherein the constriction is designed in such a way that the ring (204) can be accommodated positively in the axial direction.

6. Air spring assembly according to Claim 5, wherein the first partial air spring bellows (100) has an elastically deformable counterholder (206) on the inside thereof, at the at least one trough line of the system of folds (202), wherein the counterholder (206) is designed to accommodate the ring (204) positively with at least one of the layers of the first embedded textile reinforcements and/or of the first elastomer layers (112).

7. Air spring assembly according to one of Claims 1 to 6, wherein the ring (204) is embedded in at least one of the at least one first textile and/or elastomer layers (112) of the first partial air spring bellows (100).

8. Air spring assembly according to one of the preceding claims, wherein the first partial air spring bellows (100) and the second partial air spring bellows (102) form an area of overlap (108).

9. Air spring assembly according to Claim 8, further comprising a cylindrical outer guide of the air spring (210), wherein the longitudinal axis (214) of the outer guide is congruent with the longitudinal axis (214) of the air spring, wherein the outer guide partially surrounds the air spring bellows (104), wherein the first partial air spring bellows (100) and the second partial air spring bellows (102) are fixed to an inner wall of the outer guide by being vulcanized together, adhesively bonded and/or by means of a clamping ring (204) in the area of overlap (108) of the first partial air spring bellows (100) and the second partial air spring bellows, wherein the first partial air spring bellows (100) and the second partial air spring bellows (102) are fixed to one another by the vulcanization process, by the adhesive bonding process and/or by the clamping ring (204).

## Revendications

1. Ensemble de ressort pneumatique pour un véhicule automobile, comportant un ressort pneumatique (210), un soufflet de ressort pneumatique (104), un couvercle de ressort pneumatique et un piston de déroulage (212), dans lequel le soufflet de ressort pneumatique (104) est un soufflet roulant tubulaire, dans lequel le soufflet de ressort pneumatique (104) est disposé concentriquement autour d'un axe longitudinal central (214) du ressort pneumatique (210) entre le couvercle de ressort pneumatique et le piston de déroulage (212), dans lequel le soufflet de ressort pneumatique (104) comprend un premier soufflet de ressort pneumatique partiel (100) et un deuxième soufflet de ressort pneumatique partiel (102), dans lequel le premier soufflet de ressort pneumatique partiel (100) entoure partiellement un volume d'air (116) à l'extrémité côté couvercle du ressort pneumatique (210), dans lequel le deuxième soufflet de ressort pneumatique partiel (102) entoure le volume d'air (116) à l'extrémité côté piston de déroulage du ressort pneumatique (210), dans lequel le premier soufflet de ressort pneumatique partiel (100) comprend un premier renfort textile intégré, dans lequel le deuxième soufflet de ressort pneumatique partiel (102) comprend un deuxième renfort textile intégré, **caractérisé en ce que** le premier renfort textile comprend des premiers renforcements filamentaires dont l'axe préférentiel s'étend parallèlement ou pratiquement parallèlement à l'axe de l'axe longitudinal central (214) du ressort pneumatique (210), le deuxième renfort textile comprenant des deuxièmes renforcements filamentaires dont le premier axe préférentiel s'étend de manière oblique par rapport à l'axe longitudinal (214) du ressort pneumatique (210) et dont le deuxième axe préférentiel s'étend de manière oblique par rapport à l'axe longitudinal (214) du ressort pneumatique (210), le premier et le deuxième axe préférentiel étant inclinés l'un par rapport à l'autre, le premier soufflet de ressort pneumatique partiel (100) comprenant un premier mélange élastomère et le deuxième soufflet de ressort pneumatique partiel (102) comprenant un deuxième mélange élastomère, le premier mélange élastomère étant différent du deuxième mélange élastomère ou le premier mélange élastomère étant identique au deuxième mélange élastomère, le premier mélange élastomère comprenant au moins une première couche élastomère (112) et le deuxième mélange élastomère comprenant au moins une deuxième couche élastomère (112), le premier soufflet de ressort pneumatique partiel (100) comprenant un système de plis (202), le système de plis (202) comprenant au moins deux plis (208), lesdits au moins deux plis (208) étant formés par un pliage des couches des premiers renforts textiles intégrés et/ou des premières couches élastomères (112), lesdits au moins deux plis (208) comprenant deux lignes de sommet et une ligne de creux commune en vue depuis l'axe longitudinal central (214) du ressort pneumatique (210), lesdites au moins deux lignes de sommet et ladite au moins une ligne de creux s'étendant concentriquement autour de l'axe longitudinal (214) du ressort pneumatique (210), lesdites au moins deux lignes de sommet correspondant à des rayons maximaux du premier soufflet de ressort pneumatique partiel (100) et ladite au moins une ligne de creux correspondant à un rayon minimal du premier soufflet de ressort pneumatique partiel (100), le système de plis (202) comprenant un étranglement du premier soufflet de ressort pneumatique partiel (100) pour former l'une des lignes de creux, l'étranglement étant conçu pour recevoir une bague (204) ou un bandage en corde.

2. Ensemble de ressort pneumatique selon la revendication 1, dans lequel le premier soufflet de ressort pneumatique partiel (100) comprend un premier nombre de couches de premiers renforts textiles intégrés et/ou de premières couches élastomères (112) et le deuxième soufflet de ressort pneumatique partiel (102) comprend un deuxième nombre de couches de deuxièmes renforts textiles intégrés et/ou de deuxièmes couches élastomères (112), dans lequel le premier nombre de couches est différent du deuxième nombre de couches, dans lequel les premières et les deuxièmes couches élastomères (112) sont conçues pour rendre étanche le volume d'air (116) par rapport à un environnement extérieur.

3. Ensemble de ressort pneumatique selon l'une des revendications précédentes, dans lequel le premier soufflet de ressort pneumatique partiel (100) comprend au moins autant de couches de premiers renforts textiles intégrés que le deuxième soufflet de ressort pneumatique partiel (102).

4. Ensemble de ressort pneumatique selon la revendication 1, dans lequel la première et la deuxième couche élastomère (112) forment une couche élastomère commune (112) ou dans lequel la première et la deuxième couche élastomère (112) sont segmentées.

5. Ensemble de ressort pneumatique selon la revendication 1, dans lequel l'étranglement est conçu de telle sorte que la bague (204) peut être reçue avec complémentarité de forme dans la direction axiale.

6. Ensemble de ressort pneumatique selon la revendication 5, dans lequel le premier soufflet de ressort pneumatique partiel (100) comprend une contre-butée (206) déformable élastiquement sur son côté intérieur au niveau de ladite au moins une ligne de creux du système de plis (202), dans lequel la contre-butée (206) est conçue pour recevoir la bague (204) avec complémentarité de forme avec au moins l'une des couches de premiers renforts textiles intégrés et/ou de premières couches élastomères (112).

7. Ensemble de ressort pneumatique selon l'une des revendications 1 à 6, dans lequel la bague (204) est intégrée dans au moins l'une parmi l'au moins une première couche textile et/ou élastomère (112) du premier soufflet de ressort pneumatique partiel (100).

8. Ensemble de ressort pneumatique selon l'une des revendications précédentes, dans lequel le premier soufflet de ressort pneumatique partiel (100) et le deuxième soufflet de ressort pneumatique partiel (102) forment une zone de chevauchement (108).

9. Ensemble de ressort pneumatique selon la revendication 8, comportant en outre un guide extérieur cylindrique du ressort pneumatique (210), dans lequel l'axe longitudinal (214) du guide extérieur coïncide avec l'axe longitudinal (214) du ressort pneumatique, dans lequel le guide extérieur entoure partiellement le soufflet de ressort pneumatique (104), dans lequel le premier soufflet de ressort pneumatique partiel (100) et le deuxième soufflet de ressort pneumatique partiel (102) sont fixés à une paroi intérieure du guide extérieur au moyen d'une vulcanisation conjointe, d'un collage et/ou d'une bague de serrage (204) dans la zone de chevauchement (108) du premier soufflet de ressort pneumatique partiel (100) et du deuxième soufflet de ressort pneumatique partiel, dans lequel le premier soufflet de ressort pneumatique partiel (100) et le deuxième soufflet de ressort pneumatique partiel (102) sont fixés l'un à l'autre par la vulcanisation conjointe, le collage et/ou la bague de serrage (204).
